# EUROPÄISCHE PATENTSCHRIFT

(11) **EP 3 631 130 B1**
(45) Veröffentlichungstag und Bekanntmachung des Hinweises auf die Patenterteilung: **01.12.2021**
(21) Anmeldenummer: 18723678.1
(22) Anmeldetag: 13.04.2018
(51) Int. Cl.: E05B 81/06, E05B 81/34, E05B 81/40, F16H 25/20, F16H 57/021

(54) **STELLANTRIEB FÜR EIN KRAFTFAHRZEUG**
ACTUATING DRIVE FOR A MOTOR VEHICLE
MÉCANISME DE COMMANDE DE VÉHICULE AUTOMOBILE

(30) Priorität: 24.05.2017 DE 102017111397
(43) Veröffentlichungstag der Anmeldung: 08.04.2020
(73) Patentinhaber: Kiekert AG, 42579 Heiligenhaus (DE)
(72) Erfinder: T PFER, Claus, 71063 Sindelfingen (DE); SCHLABS, Winfried, 44869 Bochum (DE); SONNENSCHEIN, Tim, 42329 Wuppertal (DE)
(86) Internationale Anmeldenummer: PCT/DE2018/100350
(87) Internationale Veröffentlichungsnummer: WO 2018/215011

(56) Entgegenhaltungen:
- WO-A1-2004/020870
- WO-A1-2013/159968
- DE-A1-102009 036 887
- DE-A1-102011 076 560

## Beschreibung

Die Erfindung betrifft einen Stellantrieb für ein Kraftfahrzeug gemäß dem Oberbegriff des Anspruchs 1.

Antriebe und insbesondere Stellantriebe werden in heutigen Kraftfahrzeugen in vielfacher Weise eingesetzt. Dabei kann zum Beispiel ein Stellmittel, das mittels des Stellantriebs bewegbar ist, zur Verriegelung einer Tankklappe genutzt werden, es kann aber auch eine Stellbewegung initialisiert werden, um eine Funktion im Kraftfahrzeug einzulegen oder zu steuern. Es ist aber auch möglich, mittels des Stellantriebs Bewegungen zu initialisieren bzw. im Fahrzeug hervorzurufen. So ist es bekannt, Stellantriebe zum Zuziehen von Türen und/oder Klappen als sogenannte Zuziehhilfen einzusetzen.

Ein Stellantrieb mit einem Riegel ist beispielsweise aus der DE 10 2010 003 523 A1 bekannt, wobei der Stellantrieb an einer Gehäusewand eines ersten Bauteils montiert ist. Ein zweites Bauteil weist eine zweite Gehäusewand auf. Zwecks Verriegelung wird die Gehäusewand des zweiten Bauteils in eine Öffnung der Gehäusewand des ersten Bauteils hineingeschoben. Anschließend wird der Riegel des Stellglieds durch ein Loch der Gehäusewand des ersten Bauteils hindurch geschoben und weiter in ein Loch oder in einer Ausnehmung der benachbarten Gehäusewand des zweiten Bauteils hinein, um so die beiden Bauteile miteinander zu verriegeln.

Die Druckschrift DE 102 59 665 A1 offenbart einen Stellantrieb für ein Tankklappenschloss eines Kraftfahrzeugs mit einem Elektromotor, der eine Spindel verdrehen kann. Eine Drehbewegung der Spindel bewirkt eine lineare Verschiebung eines Riegels. Der Riegel wird durch einen Faltenbalg nach außen abgedichtet, um den Stellantrieb vor Feuchtigkeit und/oder Verschmutzung zu schützen.

Ein weiterer Stellantrieb zur Bewegung eines Riegels ist aus der DE 10 2011 076 560 A1 bekannt geworden. Der Riegel ist mittels eines elektrischen Antriebs, einer Getriebestufe und eines Spindelantriebes aus einem Gehäuse heraus und in ein Gehäuse hinein bewegbar. Der Riegel ist im Gehäuse geführt und wird mittels eines Schlittens angetrieben. Der Schlitten ist wiederum ist mit einer Spindel eines Spindelantriebs verbunden, so dass durch eine Drehbewegung eines Antriebsrads einerseits die Spindel und andererseits der Schlitten bewegbar sind. Je nach Drehrichtung des elektrischen Antriebs kann dann somit der Schlitten axial bewegt werden, wodurch der Riegel aus dem Gehäuse heraus und in das Gehäuse hinein bewegbar ist.

Um eine reproduzierbare und sichere Bewegung der Spindel und somit ein sicheres Bewegen des Riegels zu ermöglichen, ist die Spindel im Gehäuse gelagert. Dazu weist das Gehäuse eine Aufnahme auf, in die die Lagerpunkte der Spindel einlegbar bzw. haltbar sind. Zur endgültigen Fixierung bzw. Lagerung der Spindel sind an einem Gehäusedeckel Gegenlager angeordnet, die beim Fügen des Deckels mit der Gehäuseschale eine Fixierung der Lagerpunkte der Spindel ermöglichen.

DE 10 2016 121 188 A1 beschreibt einen Stellantrieb mit einem Gehäuse und einem elektrischen Antrieb, wobei mittels des elektrischen Antriebs ein Stellmittel in das Gehäuse hinein und aus dem Gehäuse heraus bewegbar ist. Das Stellmittel ist dabei mittels eines Spindelantriebs bewegbar, wobei zumindest eine Lagerung der Spindel in eine Ausnehmung des Gehäuses und/oder des Stellmittels einschiebbar ist. An den axialen Enden der Spindel sind Lagerhülsen angeordnet, wobei die Lagerhülsen das axiale Ende der Spindel schließen. Die Lagerhülsen weisen konische Verlängerungen auf, so dass eine möglichst geringe Anlagefläche der Spindel am Gehäuse bzw. Stellmittel realisierbar sind.

WO 2004 020 870 A1 bildet die Basis für den Oberbegriff des Anspruchs 1 und beschreibt einen Stellantrieb für einen Sitz eines Kraftfahrzeugs, aufweisend ein Gehäuse 22, einen elektrischen Antrieb 15, einen Spindelantrieb mit einer Spindel 26 und einer auf der Spindel 26 geführten Spindelmutter 14, ein Stellmittel 14 und ein Lagermittel. Mittels des elektrischen Antriebs 15 ist der Spindelantrieb bewegbar. Mittels des Spindelantriebs ist das Stellmittel 14 in das Gehäuse 22 hinein und aus dem Gehäuse 22 heraus bewegbar. Die Spindel 26 ist mittels des Lagermittels im Gehäuse 22 lagerbar. Das Lagermittel weist eine sich in Richtung einer Mittelachse der Spindel 26 hin kontinuierlich verändernde Anlagefläche auf. Die Spindel 26 hat ein Spindelende, das eine Aufnahmeöffnung aufweist. Das Lagermittel ist eine Kugel 32, die in die Aufnahmeöffnung einfügbar ist.

DE 10 2011 076 560 A1 beschreibt einen Stellantrieb für ein Kraftfahrzeug, aufweisend eine Gehäuseschale 1, einen Elektromotor 21, einen Spindelantrieb mit einer Spindel 12 und einer auf der Spindel 12 geführten Schlitten 11 mit Innengewinde, einen Riegel 3 und eine Lagerung 8. Mittels des Elektromotors 21 ist der Spindelantrieb bewegbar. Mittels des Spindelantriebs ist der Riegel 3 in die Gehäuseschale 1 hinein und aus der Gehäuseschale 1 heraus bewegbar. Die Spindel 12 ist mittels der Lagerung in der Gehäuseschale 1 lagerbar. Die Lagerung 8 ist U-förmiges Profil, das von der Innenseite der Gehäuseschale 1 einwärts vorspringt. In der Lagerung 8 wird das Ende der Spindel 12 drehbar gelagert, welches dem Riegel 3 zugewandt ist.

WO 2013 159 968 A1 beschreibt eine Getriebespindel 8 für eine Sitzverstellung eines Kraftfahrzeugs. Die Getriebespindel 8 umfasst ein Spindelgewinde 19 zur Aufnahme einer Spindelmutter 9. Auf der Getriebespindel 8 ist ein Getriebezahnrad 5 aus Kunststoff drehfest aufgespritzt, das eine Außenverzahnung 21 aufweist, mittels der die Getriebespindel 8 in Drehbewegung versetzt werden kann. Das Getreibezahnrad 5 ist an einem axialen Ende 81 der Gewindespindel 8 angeordnet. Das Getriebezahnrad 5 umschließt zumindest teilweise ein kugelförmiges Element 48, das als Axialanschlag 11 der Getriebespindel 8 ausgebildet ist.

Die DE 10 2009 036 887 A1 zeigt einen Stellantrieb für ein Kraftfahrzeug mit einem Gehäuse, einem elektrischen Antrieb, einem von dem elektrischen Antrieb bewegbaren Spindeltriebs, einem Stellmittel, das mittels des Spindeltriebs in das Gehäuse hin- und von dort hinausbewegt werden kann, wobei eine Spindel des Spindeltriebs mittels eines Lagermittels gelagert ist, welche eine sich in Richtung einer Mittelachse der Spindel hin kontinuierlich verändernde Anlagefläche aufweist. Ähnliche Stellantriebe sind auch aus der WO 2004/020870 A1 und der WO 2013/159968 A1 bekannt.

Aufgabe der Erfindung ist es, einen verbesserten Stellantrieb für ein Kraftfahrzeug bereitzustellen. Darüber hinaus ist es Aufgabe der Erfindung, eine hohe Betriebssicherheit sowie eine Leichtgängigkeit der Spindel im Gehäuse des Stellantriebs zu ermöglichen. Darüber hinaus ist es Aufgabe der Erfindung, eine konstruktiv einfache und kostengünstige Lösung für eine Lagerung einer Spindel in einem Stellantrieb bereitzustellen.

Die Lösung der Aufgabe erfolgt durch die Merkmale des unabhängigen Patentanspruchs 1. Vorteilhafte Ausgestaltungen der Erfindung sind in den Unteransprüchen angegeben. Es wird darauf hingewiesen, dass die im Folgenden beschriebenen Ausführungsbeispiele nicht beschränkend sind, es sind vielmehr beliebige Variationsmöglichkeiten der in der Beschreibung und den Unteransprüchen beschriebenen Merkmale möglich, sofern diese unter den Schutzumfang der Erfindung fallen, welcher allein durch die beigefügten Ansprüche definiert wird.

Die Erfindung schlägt einen Stellantrieb für ein Kraftfahrzeug vor, aufweisend
- ein Gehäuse, insbesondere aus einer Gehäuseschale und einem Gehäusedeckel;
- einen elektrischen Antrieb;
- einen Spindelantrieb mit einer Spindel;
- ein Stellmittel; das von einer auf der Spindel geführten Spindelmutter gebildet ist,
- ein Lagermittel;
wobei
- mittels des elektrischen Antriebs der Spindelantrieb bewegbar ist;
- mittels des Spindelantriebs das Stellmittel in das Gehäuse hinein und aus dem Gehäuse heraus bewegbar ist;
- die Spindel mittels des Lagermittels im Stellantrieb gelagert ist;
- das Lagermittel eine sich in Richtung einer Mittelachse der Spindel hin kontinuierlich verändernde Anlagefläche aufweist;
- die Spindel ein Spindelende hat, das eine Aufnahmeöffnung aufweist;
- das Lagermittel eine zylindrische Verlängerung aufweist;
- die zylindrische Verlängerung in die Aufnahmeöffnung eingefügt ist, wodurch
- das Lagermittel formschlüssig mit der Spindel verbunden ist, und
- das Spindelende formschlüssig an das Lagermittel angebunden ist.

Durch die erfindungsgemäße Ausbildung des Stellantriebs ist nunmehr die Möglichkeit gegeben, zu jedem Zeitpunkt eine definierte Anlagefläche zwischen Spindel und Lagerpunkt bereitzustellen. Insbesondere in Bezug auf die Relativbewegungen zwischen Spindel und Lagerstelle kann somit zu jedem Zeitpunkt eine vergleichbare Lagerreibung gewährleistet werden.

In vorteilhafter Weise ist das Lagermittel als separates Bauteil ausgeführt. Die Spindel ist vorzugsweise als Kunststoffspritzgussteil ausgebildet und kann eine Aufnahmeöffnung für das Lagermittel aufweisen. Das Lagermittel ist aber über ein Spindelende montierbar oder mittels einer Schraubverbindung mit der Spindel verbindbar. Aus dem separaten Aufbau ergibt sich neben einer vorteilhaften Montierbarkeit auch der Vorteil, dass eine günstige, an die Anforderungen angepasste Werkstoffkombination auswählbar ist.

Relativbewegungen zwischen Spindel und Lagerstelle ergeben sich dabei einerseits aus temperaturbedingten Dehnungen des Gehäuses bzw. der Bauteile des Stellantriebs und andererseits aus den dynamischen Beanspruchungen des Stellantriebs. Insbesondere in dem Fall, in dem mittels des Spindelantriebs große Kräfte zu übertragen sind, können Deformationen am Spindelantrieb auftreten, die wiederum zu Verformungen führen, so dass sich die Eingriffverhältnisse im Bereich der Lagerstelle ändern. Durch den sich kontinuierlich verändernden und insbesondere gewölbten Bereich des Lagermittels steht unabhängig von den Eingriffsverhältnissen zwischen Spindel und Lagerstelle eine vergleichbare Anlagefläche zur Verfügung. Durch die kontinuierliche Veränderung des Lagermittels kann eine definierte Anlagefläche und insbesondere eine sich an die Belastung anpassende Anlagefläche zur Verfügung gestellt werden.

Ein Stellantrieb gemäß der Erfindung kann in verschiedenen Anwendungsfällen zum Einsatz kommen. So sind die eingangs beschriebenen Anwendungsbeispiele selbstverständlich möglich, darüber hinaus können die Riegel oder Hebel, die mittels eines Stellmittels des Stellantriebs bewegt werden, weitere Funktionen ausführen. Mit dem Riegel kann der Stellantrieb beispielsweise eine Tankklappe, eine Ablage oder einen Stecker verriegeln, um beispielsweise ein Fahrzeug zu sichern oder einen Ladevorgang zum Beispiel im Rahmen einer Aufladung eines Kraftfahrzeuges zu sichern.

Ein erfindungsgemäßer Stellantrieb kann darüber hinaus auch dazu benutzt werden, in einem Bowdenzug integriert zu werden, um eine Relativbewegung zwischen einer Bowdenzugseele und einem Bowdenzugmantel zu erzeugen. Hierbei reicht eine Bowdenzugseele durch den Stellantrieb hindurch, wobei ein Ende eines Bowdenzugmantels Beispiel im Gehäuse des Stellantriebs fixierbar ist und ein weiteres Ende des Bowdenzugs mit dem Stellmittel verbunden ist. Durch die Bewegung des Stellmittels im Stellantrieb ist dann eine Relativbewegung zwischen der Bowdenzugseele und dem Bowdenzugmantel erzeugbar. Im Sinne der Erfindung bezieht sich das Hinein- und Herausbewegen des Stellmittels in einem derartigen Anwendungsfall auf das Hinein- und Herausbewegen der Bowdenzugseele. Die Einsatzgebiete eines Stellantriebs sind somit vielfältig und hier lediglich bereichsweise aufzählbar.

Bevorzugt weist das Gehäuse eine Gehäuseschale auf, in die beispielsweise der elektrischer Antrieb, ein oder mehrere Mikroschalter, eine Steckerbuchse und/oder das Stellmittel integrierbar und aufnehmbar sind. Vorstellbar ist es natürlich auch, dass die Gehäuseschale mehrteilig ausgebildet ist und mit einem Gehäusedeckel zusammenwirkt. Darüber hinaus kann auch der Gehäusedeckel mehrteilig ausgeführt sein, wenn dies beispielsweise fertigungstechnisch oder montagetechnisch bedingt ist.

Das Stellmittel wirkt mit einem Spindelantrieb zusammen, wobei die Spindelmutter Teil des Stellmittels ist, die auf der Spindel geführt ist. Der Spindelantrieb selbst kann zunächst wiederum zumindest in Bezug auf die Spindel einstückig mit einer Getriebestufe bzw. einem Schneckenrad ausgebildet sein. Das Schneckenrad kann dann mit einer Schnecke zusammenwirken, die beispielsweise unmittelbar auf einer Motorwelle des elektrischen Antriebs gelagert ist.

Der Formschluss des Lagermittels mit der Spindel kann dabei derart ausgebildet sein, dass eine Montagesicherung gegeben ist, und gleichzeitig kann der Formschluss zur Sicherung des Lagermittels in der Spindel dienen.

In einer vorteilhaften Ausgestaltungsform der Erfindung weist das Lagermittel eine konvex gebogene Anlagefläche auf. Eine konvex gebogene Anlagefläche am Lagermittel bietet die Möglichkeit, dass die Anlagefläche lediglich bereichsweise in Eingriff mit der Lageraufnahme im Gehäuse bzw. Stellmittel anliegt. Im Falle einer geraden in Bezug auf die Mittelachse der Spindel rechtwinkelige Lageraufnahme liegt die konvexe Anlagefläche somit punktförmig im Lagerpunkt in axialer Richtung an. Eine punktförmige Anlagefläche ermöglicht hierbei eine minimale Reibung zwischen Spindel und Lagerpunkt, so dass die Spindel eine optimale Lagerung im Stellantrieb erfährt. Aufgrund der konvexen Form beziehungsweise einer Balligkeit der Anlagefläche kann die Anlagefläche eine punktförmige Berührungsfläche mit einem sehr geringen Reibradius, gegen null, aufweisen, so dass eine Reibung minimal ist.

Weist das Lagermittel eine einem einheitlichen Radius aufweisende Anlagefläche auf, so ergibt sich eine weitere vorteilhafte Ausgestaltungsform der Erfindung. Eine einen einheitlichen Radius aufweisende Anlagefläche am Lagermittel bietet die Möglichkeit, der Anpassung des Lagermittels an die Gegebenheiten im Lagerpunkt. Dabei ist es zum Beispiel vorstellbar, dass im Lagerpunkt eine formschlüssige Aufnahme des Lagermittels erfolgen soll, so dass neben einer optimierten Lagerung eine Positionssicherung für die Spindel vorsehbar ist. Das Lagermittel kann dann in eine zum Beispiel Vertiefung im Lagerpunkt formschlüssig eingreifen, so dass ein optimiertes Lagern und Führen bzw. Sichern der Spindel ermöglichbar ist. Die Ausbildung des Lagermittels in definierbaren Radien bietet darüber hinaus einen konstruktiven Vorteil, da eine Fertigung erleichtert wird.

In die Spindel ist eine Aufnahmeöffnung insbesondere eine zylindrische Öffnung, eingeformt, und das Lagermittel kann zumindest bereichsweise in die Spindel eingeführt sein. Einerseits sind Öffnungen und insbesondere zylindrische Ausformungen oder Bohrungen in der Spindel leicht ausbildbar und darüber hinaus wird eine sichere Verbindung und Lagerung der Spindel bzw. auch des Lagermittels in der Spindel ermöglicht. Insbesondere die Ausbildung einer symmetrischen Öffnung in der Spindel ermöglicht ein leichtes Montieren sowie eine positionsgenaue Aufnahme des Lagermittels in der Spindel. Das Lagermittel kann dabei zumindest bereichsweise in die Öffnung eingeführt sein und lediglich bereichsweise aus der Spindel herausragen bzw. über das Spindelende hinausstehen. Somit kommt lediglich das Lagermittel mit dem Lagerpunkt zumindest in axialer Richtung in Eingriff.

In vorteilhafter Weise ist das Lagermittel aus Kunststoff und/oder Metall ausbildbar. Die Ausbildung des Lagermittels aus Kunststoff bietet die Möglichkeit einer leichten konstruktiven Fertigung und gleichzeitig kann die Auswahl des Kunststoffs dahingehend erfolgen, dass das Lagermittel geeignete Lagereigenschaften aufweist. Dabei stehen spezifische Werkstoffeigenschaften wie beispielsweise Gleiteigenschaften im Vordergrund, wohingegen die Spindel selbst den Anforderungen an eine hohe Stabilität und Kraftübertragung als Beispiele für spezifische Eigenschaften genannt sein können.

Die Ausbildung des Lagermittels aus Metall bietet dabei den Vorteil, dass eine hohe Verschleißbeständigkeit gewährleistet werden kann. In vorteilhafter Weise kann dabei eine Werkstoffkombination aus Metall und Kunststoff gebildet werden. Einerseits besteht das Lagermittel aus einem metallischen Werkstoff, wie beispielsweise Aluminium oder Stahl, und andererseits das Gegenlager, zum Beispiel das Gehäuse aus Kunststoff, so dass eine verschleißarme Lagerung gewährleistet werden kann. Das Lagermittel kann dann beispielsweise als Drehteil gefertigt sein.

Eine Ausbildung des Lagermittels als Hybrid- oder Verbundwerkstoffbauteil, das heißt aus Kunststoff und einem metallischen Werkstoff, ist ebenfalls vorstellbar. Dabei kann beispielsweise der mit dem Gehäuse in Eingriff befindliche, zum Beispiel konvexe Anlageteil des Lagermittels aus einem metallischen Werkstoff bestehen, wohingegen ein Fügebereich, zum Beispiel ein in die Spindel einführbarer Bereich, aus Kunststoff besteht, ober entsprechend umgekehrt. Hierdurch ist eine den Anforderungen entsprechende Anpassung des Lagermittels ermöglichbar.

Die Spindel, die bevorzugt ebenfalls aus Kunststoff gefertigt wird und bevorzugt ein Spritzgussbauteil ist, kann somit an die spezifischen Eigenschaften anpassbar ausgebildet sein. Ebenso ist das Lagermittel zum Beispiel aus einem höherfesten Werkstoff mit guten Gleiteigenschaften ausbildbar. Je nach Anforderung an das Lagermittel kann das Lagermittel auch zum Beispiel dämpfende Eigenschaften aufweisen. Dämpfende Eigenschaften ermöglichen dabei die Unterdrückung von Antriebsgeräuschen über die Lagerstelle hinweg. In einer Ausführungsform der Erfindung ergibt sich dann ein Vorteil, wenn das Lagermittel eine kreisrunde Form aufweist und umfänglich formschlüssig an die Spindel anpassbar ist. Ist beispielsweise das Spindelende zylindrisch ausgebildet , mit der Aufnahmeöffnung, in die das Lagermittel einfügbar ist, so kann das Lagermittel an einer Umfangsfläche des zylindrischen Spindelendes anliegen. Es ergibt sich somit eine kreisförmige Anlagefläche für das Lagermittel am Spindelende.

Die Kraftübertragung zwischen Lagermittel und Spindel bzw. Spindelende erfolgt dann somit über eine Kreisfläche, so dass eine Lastverteilung flächenmäßig in die Spindel einleitbar ist. Somit addiert sich der Vorteil einer punktuellen Anlagefläche des Lagermittels am Gehäuse mit dem Vorteil einer günstigen Kraftübertragung in die Spindel hinein. In vorteilhafter Weise ist das Spindelende kreisringförmig ausgebildet, kann aber zur Lagesicherung des Lagermittels auch eine Kontur aufweisen, wie beispielsweise eine Wellenform, so dass zusätzlicher Verdrehschutz für das Lagermittel ausformbar ist.

In vorteilhafter Weise kann das Lagermittel die Spindel an den beiden Spindelenden begrenzen bzw. lagern. Die Anordnung beidseitiger Lagermittel ermöglicht eine günstige Lagerung der Spindel im Stellmittel, so dass nur geringe Reibungskräfte in den Lagerpunkten auftreten. Zumindest wird die axiale Kraftübertragung der Spindel auf ein Minimum reduziert, wobei nicht die Kraftübertragung selbst minimiert wird, sondern die Reibungsverluste bei einer Drehbewegung der Spindel in Bezug auf die Lagerstellen im Stellmittel. Diese Reibungskräfte sind Verluste, die über den Antrieb in die Spindel einzuleiten sind, die aber dem Stellmittel zur Bewegung nicht zur Verfügung stehen. Durch die beidseitige Lagerung der Spindelenden in einem erfindungsgemäßen Lagermittel kann somit einerseits eine Abstützung im Gehäuse realisiert werden. Die Abstützung im Gehäuse wird aber in Bezug auf Reibungsverluste reduziert. Nachfolgend wird die Erfindung unter Bezugnahme auf die anliegenden Zeichnungen anhand eines bevorzugten Ausführungsbeispiels näher erläutert. Es gilt jedoch der Grundsatz, dass das Ausführungsbeispiel die Erfindung nicht beschränkt, sondern lediglich eine vorteilhafte Ausgestaltungsform darstellt.

Es zeigt:
- FIG. 1: eine dreidimensionale Ansicht auf ein Stellmittel mit einem elektrischen Antrieb und einem in eine Gehäuseschale eingelegten Spindelantrieb;
- FIG. 2: eine dreidimensionale Ansicht auf ein Spindelende mit einem montierten Lagermittel;
- FIG. 3: eine dreidimensionale Ansicht auf ein Spindelende ohne ein Lagermittel; und
- FIG. 4: eine vergrößerte Darstellung des Spindelendes im Bereich eines Lagermittels mit einem integrierten Lagermittel.

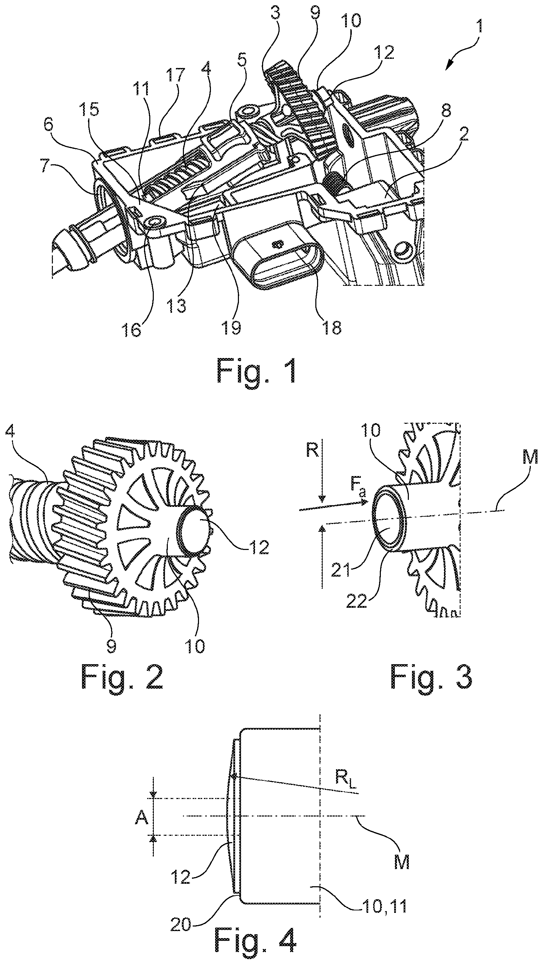

In der FIG. 1 ist eine dreidimensionale Ansicht auf einen Stellantrieb 1 für ein Kraftfahrzeug wiedergegeben, aufweisend einen elektrischen Antrieb 2, eine Getriebestufe 3, eine einstückig mit der Getriebestufe 3 ausgebildete Spindel 4 und ein Stellmittel 5, wobei das Stellmittel 5 durch eine Öffnung des Gehäuses 6 des Stellantriebs 1 hindurch montierbar ist. Dargestellt ist das teilweise montierte Stellmittel 5, wobei das Stellmittel 5 einerseits mit der Spindel 4 verbunden ist bzw. die Spindel 4 in das Stellmittel 5 eingefügt wurde, und das Stellmittel 5 durch eine Öffnung 7 zum Erreichen der Montageposition eingefügt dargestellt ist.

Der elektrische Antrieb 2 weist eine Schnecke 8 auf, die mit einem Schneckenrad 9 zusammenwirkt. Das Schneckenrad 9 als Teil der Getriebestufe 3 ist in diesem Ausführungsbeispiel aus Kunststoff und einstückig mit der Spindel 4 gebildet. An den axialen Spindelenden 10, 11 der Spindel 4 ist jeweils ein Lagermittel 12 montiert. Das Stellmittel 5 weist darüber hinaus Führungsmittel 13 auf, mittels derer das Stellmittel 5 im Gehäuse 6 axial führbar ist.

Im Gehäuse 6, wobei hier lediglich die Gehäuseschale 6 dargestellt ist, ist ferner eine Ausnehmung 14 eingeformt, in die das Spindelende 10 einfügbar ist. Ein nicht dargestellter Gehäusedeckel kann auf eine Montagefläche 15 aufgelegt und mittels einer Verschraubungsöffnung 16 und/oder mittels einer Clipsverbindung 17 fest mit der Gehäuseschale 6 verbunden werden. Zu erkennen ist darüber hinaus noch eine Steckerbuchse 18 zum Beispiel zur elektrischen Kontaktierung eines Mikroschalters 19 und/oder des elektrischen Antriebs 2.

In der FIG. 2 ist eine dreidimensionale Ansicht auf die Spindel 4 losgelöst von weiteren Bestandteilen des Stellantriebs 1 wiedergegeben. Gezeigt ist eine Ansicht auf ein Spindelende 10 im Bereich des Schneckenrads 9. In diesem Ausführungsbeispiel ist das Lagermittel 12 als separates Bauteil formschlüssig mit der Spindel 4 verbunden. Dabei weist das Lagermittel 12 eine kreisförmige Form auf, die das Spindelende 10 nahezu vollständig überdeckt. Dabei steht das Lagermittel 12 über das zylindrische Ende 20 des Spindelendes 10 hinaus, wie dies deutlicher in der FIG. 4 zu erkennen ist. Durch den Überstand des Lagermittels 12 wird eine ausschließliche Verbindung in axialer Richtung der Spindel 4 über das Lagermittel 12 gewährleistet.

In der FIG. 3 ist eine vergrößerte Darstellung des Spindelendes 10 ohne das Lagermittel 12 wiedergegeben. Das Spindelende 10 weist eine Aufnahmeöffnung 21 auf, in die eine zylindrische Verlängerung des Lagermittels 12 einfügbar ist. Somit ist das Lagermittel 12 formschlüssig mit der Spindel 4 verbindbar.

Darüber hinaus ist der FIG. 3 zu entnehmen, dass ausgehend von einer Mittelachse M der Spindel 4 sich eine kreisringförmige Auflagefläche 22 für die Übertragung einer axialen Kraft Fa ergibt. Die axiale Kraft Fa wirkt im Abstand vom Radius R von der Mittelachse M in einer kreisringförmigen Auflagefläche 22 gegen das Spindelende 10.

In der FIG. 4 ist das Lagermittel 12 in einer vergrößerten Seitenansicht auf die Spindel 4 und im Besonderen auf das Spindelende 10, 11 wiedergegeben. Das Lagermittel 12 ragt über das zylindrische Ende 20 hinaus und schließt umfänglich nahezu mit dem zylindrischen Ende 20 ab. Deutlich zu erkennen ist, dass das Lagermittel 12 eine sich in Richtung der Mittelachse M kontinuierlich verändernde Anlagefläche A aufweist. Veränderlich ist dabei die Anlagefläche A dahingehend, dass je nach zum Beispiel Ausdehnung des Gehäuses 6 zum Beispiel temperaturbedingt, die Anlagefläche A ändern kann, oder wenn beispielsweise lastbedingt das Lagermittel 12 um die Mittelachse M herum ausgelenkt wird. Je nach Belastung und/oder Temperatur stellt sich die geringstmögliche Anlagefläche A zwischen Spindel 4 und Gehäuse 6 bzw. Stellmittel 5 ein. Mittels des Lagermittels 12 ist somit eine punktuelle Anlagefläche A zwischen Spindel 4, Gehäuse 6 und Stellmittel 5 erzielbar, so dass mit geringstmöglichen Reibungsverlusten die Spindel 4 und somit das Stellmittel 5 bewegbar ist.

Das Lagermittel 12 weist einen Anlagebereich auf, der mit beispielsweise dem Gehäuse 6 in Eingriff bringbar ist und einen Fügebereich, der zum Bespiel in die Spindel 4 einfügbar ist. Dabei kann der Anlagebereich am zylindrischen Ende 20 der Spindel 4 anliegen, wohingegen der Fügebereich beispielsweise formschlüssig in eine Öffnung der Spindel 4 einfügbar ist.

### BEZUGSZEICHENLISTE

- 1: Stellantrieb
- 2: elektrischer Antrieb
- 3: Getriebestufe
- 4: Spindel
- 5: Spindelmutter, Stellmittel
- 6: Gehäuse
- 7: Öffnung
- 8: Schnecke
- 9: Schneckenrad
- 10, 11: Spindelende
- 12: Lagermittel
- 13: Führungsmittel
- 14: Ausnehmung
- 15: Montagefläche
- 16: Verschraubungsöffnung
- 17: Clipsverbindung
- 18: Steckerbuchse
- 19: Mikroschalter
- 20: zylindrisches Ende
- 21: Aufnahmeöffnung
- 22: Auflagefläche
- M: Mittelachse
- Fa: axiale Kraft
- R: Radius
- R_{L}: Radius Lagermittel
- A: Anlagefläche

## Patentansprüche

1. Stellantrieb (1) für ein Kraftfahrzeug, aufweisend
• ein Gehäuse (6), insbesondere aus einer Gehäuseschale und einem Gehäusedeckel;
• einen elektrischen Antrieb (2);
• einen Spindelantrieb mit einer Spindel (4);
• ein Stellmittel (5), das von einer auf der Spindel (4) geführten Spindelmutter gebildet ist;
• ein Lagermittel (12);
wobei
• mittels des elektrischen Antriebs (2) der Spindelantrieb bewegbar ist;
• mittels des Spindelantriebs das Stellmittel (5) in das Gehäuse (6) hinein und aus dem Gehäuse (6) heraus bewegbar ist;
• die Spindel (4) mittels des Lagermittels (12) im Stellantrieb (1) gelagert ist;
• das Lagermittel (12) eine sich in Richtung einer Mittelachse (M) der Spindel (4) hin kontinuierlich verändernde Anlagefläche (A) aufweist;
• die Spindel (4) ein Spindelende (10, 11) hat, das eine Aufnahmeöffnung (21) aufweist;
**dadurch gekennzeichnet, dass**
• das Lagermittel (12) eine zylindrische Verlängerung aufweist;
• die zylindrische Verlängerung in die Aufnahmeöffnung (21) eingefügt ist, wodurch
• das Lagermittel (12) formschlüssig mit der Spindel (4) verbunden ist, und
• das Spindelende (10, 11) formschlüssig an das Lagermittel (12) angebunden ist.

2. Stellantrieb (1) nach Anspruch 1, **dadurch gekennzeichnet, dass** das Lagermittel (12) eine konvexe Anlagefläche (A) aufweist.

3. Stellantrieb (1) nach einem der Ansprüche 1 oder 2, **dadurch gekennzeichnet, dass** das Lagermittel (12) eine einen einheitlichen Radius (R_{L}) aufweisende Anlagefläche (A) aufweist.

4. Stellantrieb (1) nach einem der vorigen Ansprüche, **dadurch gekennzeichnet, dass** das Lagermittel (12) aus Kunststoff und/oder Stahl ausgebildet ist.

5. Stellantrieb (1) nach einem der vorigen Ansprüche, **dadurch gekennzeichnet, dass** das Lagermittel (12) eine kreisrunde Form aufweist und umfänglich formschlüssig an die Spindel (4) angepasst ist.

6. Stellantrieb (1) nach einem der vorigen Ansprüche, **dadurch gekennzeichnet, dass** das Lagermittel (12) zumindest bereichsweise umfänglich mit einem äußeren Umfang (22) des Spindelendes (10, 11) abschließt.

7. Stellantrieb (1) nach einem der vorigen Ansprüche, **dadurch gekennzeichnet, dass** das Lagermittel (12) die Spindel (4) an beiden Spindelenden (10, 11) lagert.

## Claims

1. Control drive (1) for a motor vehicle, comprising
• a housing (6), in particular consisting of a housing shell and a housing cover;
• an electric drive (2);
• a spindle drive comprising a spindle (4);
• a control means (5) which is formed by a spindle nut guided on the spindle (4);
• a mounting means (12);
• it being possible to move the spindle drive by means of the electric drive (2);
• it being possible to move the control means (5) into the housing (6) and out of the housing (6) by means of the spindle drive;
• the spindle (4) being mounted in the control drive (1) by means of the mounting means (12);
• the mounting means (12) having a contact surface (A) which continuously changes in the direction of a central axis (M) of the spindle (4);
• the spindle (4) having a spindle end (10, 11) which has a receiving opening (21);
**characterized in that**
• the mounting means (12) has a cylindrical extension;
• the cylindrical extension is inserted into the receiving opening (21), as a result of which
• the mounting means (12) is form-fittingly connected to the spindle (4), and
• the spindle end (10, 11) is form-fittingly attached to the mounting means (12).

2. Control drive (1) according to claim 1, **characterized in that** the mounting means (12) has a convex contact surface (A).

3. Control drive (1) according to either claim 1 or claim 2, **characterized in that** the mounting means (12) has a contact surface (A) which has a uniform radius (R_{L}).

4. Control drive (1) according to any of the preceding claims, **characterized in that** the mounting means (12) is made of plastics material and/or steel.

5. Control drive (1) according to any of the preceding claims, **characterized in that** the mounting means (12) has a circular shape and is circumferentially form-fittingly adapted to the spindle (4).

6. Control drive (1) according to any of the preceding claims, **characterized in that** the mounting means (12) is circumferentially flush, at least in regions, with an outer circumference (22) of the spindle end (10, 11).

7. Control drive (1) according to any of the preceding claims, **characterized in that** the mounting means (12) mounts the spindle (4) at both spindle ends (10, 11).

## Revendications

1. Entraînement d'actionnement (1) pour véhicule automobile, présentant
• un boîtier (6), en particulier constitué d'une coque de boîtier et d'un couvercle de boîtier ;
• un entraînement électrique (2) ;
• un entraînement de broche comportant une broche (4) ;
• un moyen d'actionnement (5) qui est formé par un écrou de broche guidé sur la broche (4) ;
• un moyen de support (12) ;
dans lequel
• l'entraînement de broche peut être déplacé au moyen de l'entraînement électrique (2) ;
• le moyen de réglage (5) peut être déplacé dans le boîtier (6) et hors du boîtier (6) au moyen de l'entraînement de broche ;
• la broche (4) est supportée dans l'entraînement d'actionnement (1) au moyen du moyen de support (12) ;
• le moyen de support (12) présente une surface de contact (A) changeant continuellement en direction d'un axe central (M) de la broche (4) ;
• la broche (4) possède une extrémité de broche (10, 11), laquelle présente une ouverture de réception (21) ;
**caractérisé en ce que**
• le moyen de support (12) présente un prolongement cylindrique ;
• le prolongement cylindrique est inséré dans l'ouverture de réception (21), moyennant quoi
• le moyen de support (12) est relié à la broche (4) par complémentarité de forme, et
• l'extrémité de broche (10, 11) est fixée au moyen de support (12) par complémentarité de forme.

2. Entraînement d'actionnement (1) selon la revendication 1, **caractérisé en ce que** le moyen de support (12) présente une surface de contact (A) convexe.

3. Entraînement d'actionnement (1) selon l'une des revendications 1 ou 2, **caractérisé en ce que** le moyen de support (12) présente une surface de contact (A) présentant un rayon uniforme (R_{L}).

4. Entraînement d'actionnement (1) selon l'une des revendications précédentes, **caractérisé en ce que** le moyen de support (12) est conçu en matière plastique et/ou en acier.

5. Entraînement d'actionnement (1) selon l'une des revendications précédentes, **caractérisé en ce que** le moyen de support (12) présente une forme circulaire et est adapté de manière circonférentielle à la broche (4) par complémentarité de forme.

6. Entraînement d'actionnement (1) selon l'une des revendications précédentes, **caractérisé en ce que** le moyen de support (12) se termine au moins dans certaines régions de manière circonférentielle avec une circonférence extérieure (22) de l'extrémité de broche (10, 11).

7. Entraînement d'actionnement (1) selon l'une des revendications précédentes, **caractérisé en ce que** le moyen de support (12) supporte la broche (4) aux deux extrémités de broche (10, 11).
